# EUROPEAN PATENT APPLICATION

(11) **EP 4 365 685 A1**
(43) Date of publication of application: **08.05.2024**
(21) Application number: 22853510.0
(22) Date of filing: 05.08.2022
(51) Int. Cl.: G04G 21/00, G04G 17/08, G04G 9/00, G06F 3/0362, G06F 3/14, G04G 99/00

(54) **METHOD AND ELECTRONIC DEVICE FOR RECOGNIZING ANGLE OF ROTATION OF ANNULAR MEMBER**

(30) Priority: 06.08.2021 KR 20210104137
(71) Applicant: Samsung Electronics Co., Ltd., Suwon-si, Gyeonggi-do 16677 (KR)
(72) Inventor: OH, Sejeong, Suwon-si, Gyeonggi-do 16677 (KR); EOM, Kihun, Suwon-si, Gyeonggi-do 16677 (KR); JEONG, Sungnam, Suwon-si, Gyeonggi-do 16677 (KR); KIM, Taekeun, Suwon-si, Gyeonggi-do 16677 (KR)
(74) Representative: HGF
(86) International application number: PCT/KR2022/011606
(87) International publication number: WO 2023/014135

(57) **Abstract**

According to various embodiments, an electronic device may comprise: a front cover; a rear cover which is disposed opposite to the front cover; an annular member which is a side member surrounding at least a part of the space between the front cover and the rear cover, and includes a display at least partially disposed along the front cover and at least one magnetic member arranged at a predetermined first angle and a predetermined first distance with respect to the center of the display; a first Hall sensor which is disposed at a predetermined second distance from the center of the display; a second Hall sensor which is disposed at the predetermined second distance from the center of the display and is spaced a second angle smaller than the first angle apart from the first Hall sensor; a memory; and a processor which is operatively connected to the memory. The processor may: acquire first magnetic information corresponding to the at least one magnetic member on the basis of the first Hall sensor; acquire second magnetic information corresponding to the at least one magnetic member on the basis of the second Hall sensor; on the basis of the first magnetic information and the second magnetic information, identify whether the annular member rotates; and in response to rotation of the annular member, control a user interface displayed through the display. Various other embodiments may also be possible.

## Description

### [Technical Field]

Various embodiments of the disclosure relate to a method and an electronic device for recognizing the rotation angle of an annular member.

### [Background Art]

The development of electronic devices has led to their application in various fields that are closely related to our lives. In particular, among these electronic devices, portable devices are becoming essential devices in our lives. Portable devices are manufactured in various sizes and shapes depending on their functions and user preferences, and are manufactured taking into account its external beauty as well as the functions and slimness of the device.

In particular, wearable electronic devices are manufactured to be miniaturized so as not to interfere with the user's movements, and are designed to efficiently perform various functions in a limited size. Wearable electronic devices may support various types of input methods.

### [Disclosure of Invention]

### [Technical Problem]

An electronic device may include a wearable electronic device that is at least partially mounted on the user's body, and the wearable electronic device may include a watch worn on the wrist. The watch may include an annular member (e.g., a bezel, a bezel housing, a rotatable wheel, and/or a rotatable crown) rotatably disposed in at least a partial area of the housing.

Electronic devices (e.g., watches or wearable electronic devices) may detect, in addition to touch input to a display and/or input to physical buttons, input by rotation of an annular member that is configured as at least a portion of the exterior (e.g., rotation direction, rotation angle, rotation speed, and/or the amount of rotation). The electronic device may recognize an input by rotation of the annular member as one input command. For example, in the state in which at least one magnetic member (e.g., a member having magnetic properties) is disposed inside the annular member, the electronic device may detect the at least one magnetic member using Hall sensors (e.g., Hall ICs) disposed along the rotation trajectory of the annular member.

The electronic device may have at least one Hall sensor disposed along the rotation trajectory of the annular member, detect contact with a magnetic member included in the annular member through the Hall sensor, and identify rotation (e.g., a rotational motion) of the annular member. Since the electronic device identifies the rotation of the annular member through contact between the Hall sensor and the magnetic member, it may be difficult to continuously identify the rotation of the annular member in real time. Since at least one Hall sensor is disposed along the rotation trajectory, there may be restrictions on the arrangement of components with respect to the internal space of the rotation trajectory.

### [Solution to Problem]

According to various embodiments, an electronic device may include a front cover, a rear cover disposed on the opposite side of the front cover, an annular member that is a side member at least partially surrounding a space between the front cover and the rear cover and includes a display disposed at least partially along the front cover and at least one magnetic member disposed at a predetermined first angle and a predetermined first distance with respect to the center of the display, a first Hall sensor disposed to be spaced a predetermined second distance apart from the center of the display, a second Hall sensor disposed to be spaced the predetermined second distance apart from the center of the display and disposed to be spaced apart from the first Hall sensor at a second angle, which is smaller than the first angle, therebetween, a memory, and a processor operatively connected to the memory. The processor may acquire first magnetic information corresponding to the at least one magnetic member, based on the first Hall sensor, acquire second magnetic information corresponding to the at least one magnetic member, based on the second Hall sensor, identify whether or not the annular member rotates, based on the first magnetic information and the second magnetic information, and control a user interface displayed through the display in response to the rotation.

A method according to various embodiments may include acquiring first magnetic information corresponding to at least one magnetic member disposed on an annular member, based on a first Hall sensor, acquiring second magnetic information corresponding to the at least one magnetic member, based on a second Hall sensor, identifying whether or not the annular member rotates based on the first magnetic information and the second magnetic information, and controlling a user interface displayed through a display in response to the rotation, wherein the at least one magnetic member may be disposed to be spaced apart from each other at a first angle therebetween with respect to the center of the display, and wherein the first Hall sensor and the second Hall sensor may be disposed to be spaced apart from each other at a second angle, which is smaller than the first angle, therebetween.

### [Advantageous Effects of Invention]

According to various embodiments of the disclosure, the electronic device may have at least two Hall sensors (e.g., Hall ICs or a first Hall sensor and/or a second Hall sensor) disposed at a predetermined interval in the inner space of the electronic device and acquire magnetic information about at least one magnetic member disposed in the annular member using at least two Hall sensors. According to an embodiment, the electronic device may identify a rotation angle for the annular member, based on first magnetic information acquired through the first Hall sensor and second magnetic information acquired through the second Hall sensor. According to an embodiment, the electronic device may acquire magnetic information about the first Hall sensor and the second Hall sensor in real time and continue to identify whether or not the annular member rotates.

According to an embodiment, the electronic device may control a user interface, based on the rotational movement of the annular member, and may enable smooth screen switching when switching the screen of the user interface. The electronic device may control the display module such that the screen switches smoothly like an animation even when the screen is enlarged (e.g., zoom-in) or reduced (e.g., zoom-out). In addition, various effects directly or indirectly identified through this document may be provided.

### [Brief Description of Drawings]

In connection with the description of the drawings, identical or similar reference numerals may be used for identical or similar elements.
FIG. 1 is a block diagram of an electronic device in a network environment according to various embodiments of the disclosure.
FIG. 2A is a perspective view of the front of an electronic device according to various embodiments of the disclosure.
FIG. 2B is a perspective view of the rear of an electronic device according to various embodiments of the disclosure.
FIG. 3 is an exploded perspective view of an electronic device according to various embodiments of the disclosure.
FIG. 4 is a diagram illustrating an example of at least one magnetic member disposed in an annular member of an electronic device and at least two Hall sensors disposed in the inner space of an electronic device according to various embodiments of the disclosure.
FIG. 5 is a block diagram of an electronic device according to various embodiments of the disclosure.
FIG. 6 is a flowchart illustrating a method of identifying the rotation angle of an annular member, based on at least two Hall sensors, according to various embodiments of the disclosure.
FIG. 7 is a diagram illustrating an example of a method of calculating the rotation angle of an annular member using two pieces of angle data according to various embodiments of the disclosure.
FIG. 8 is a graph showing an x-magnetic force value corresponding to the x-axis, a y-magnetic force value corresponding to the y-axis, and/or a z-magnetic force value corresponding to the z-axis, based on magnetic information acquired by rotation of the annular member, according to various embodiments of the disclosure.
FIG. 9 is a graph illustrating the operation of calculating the rotation angle of an annular member according to various embodiments of the disclosure.
FIG. 10A is a graph showing a first point and a second point of an annular member according to various embodiments of the disclosure.
FIG. 10B is a graph illustrating the operation of calculating the final angle according to a first point of an annular member according to various embodiments of the disclosure.
FIG. 10C is a graph illustrating the operation of calculating the final angle according to a second point of an annular member according to various embodiments of the disclosure.
FIG. 11 is a diagram illustrating an example of an operation in which a user interface is displayed when an annular member is rotated according to various embodiments of the disclosure.
FIG. 12 is a diagram illustrating an example of an operation in which a map is enlarged and reduced when an annular member is rotated according to various embodiments of the disclosure.

### [Mode for the Invention]

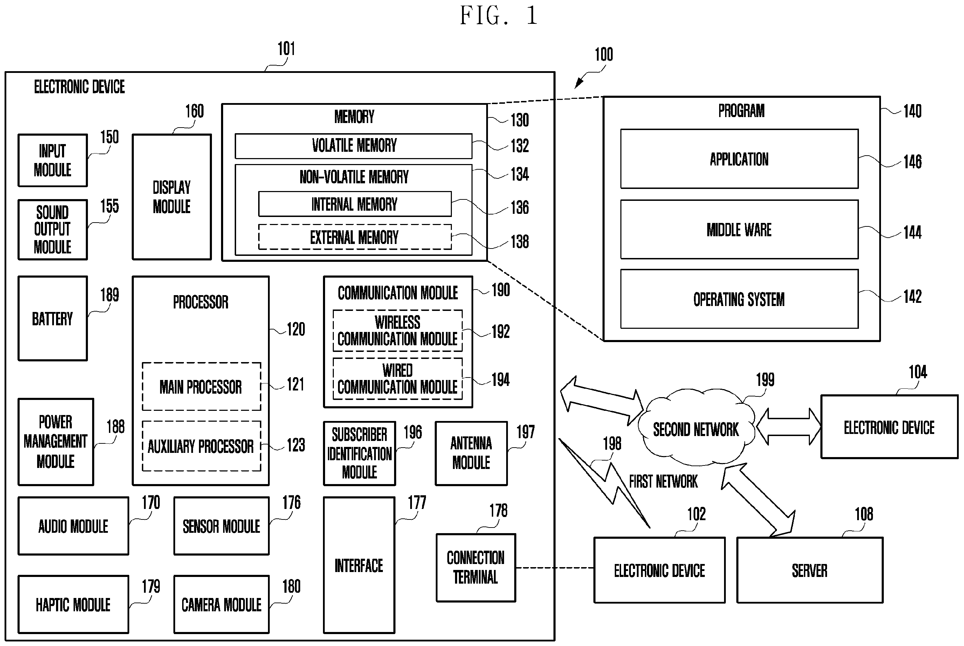

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

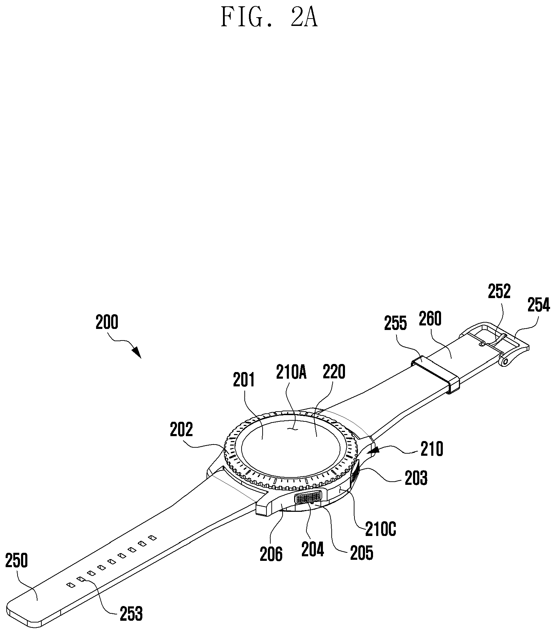

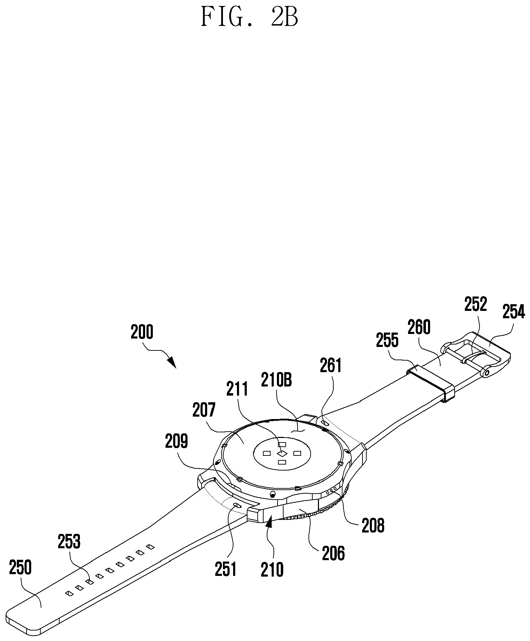

FIG. 2A is a perspective view of the front of an electronic device 200 according to various embodiments of the disclosure. FIG. 2B is a perspective view of the rear of the electronic device 200 in FIG. 2A according to various embodiments of the disclosure.

The electronic device 200 in FIGS. 2A and 2B may be at least partially similar to the electronic device 101 in FIG. 1 or may further include other embodiments of the electronic device.

Referring to FIGS. 2A and 2B, the electronic device 200 according to an embodiment may include a housing 210 including a first surface (or front surface) 210A, a second surface (or rear surface) 210B, and a side surface 210C surrounding the space between the first surface 210A and the second surfaces 210B, and fastening members 250 and 260 (e.g., straps, connecting members, and/or coupling members) connected to at least a portion of the housing 210 and configured to detachably fasten the electronic device 200 to a user's body part (e.g., a wrist, an ankle, or the like). In another embodiment (not shown), the housing 210 may refer to a structure that constitutes some of the first surface 210A, second surface 210B, and side surface 210C in FIG. 2A. According to an embodiment, the first surface 210A may be formed at least in part by a substantially transparent front plate 201 (e.g., a glass plate including various coating layers, or a polymer plate). The second surface 210B may be formed by a substantially opaque rear plate 207. The rear plate 207 may be made of, for example, coated or tinted glass, ceramic, polymer, metal (e.g., aluminum, stainless steel (STS), or magnesium), and/or a combination of at least two of the foregoing materials. The side surface 210C may be formed by a side bezel structure (or "side member") 206 that is coupled to the front plate 201 and the rear plate 207 and includes metal and/or polymer. In a certain embodiment, the rear plate 207 and side bezel structure 206 may be integrally formed and include the same material (e.g., a metallic material such as aluminum). The fastening members 250 and 260 may be formed of various materials and in various shapes. They may be formed of fabric, leather, rubber, urethane, metal, ceramic, or a combination of at least two of the above materials so as to be integrated and such that a plurality of unit links moves relative to each other.

According to an embodiment, the electronic device 200 may include at least one or more of a display 220 (e.g., the display module 160 in FIG. 1), audio modules 205 and 208 (e.g., the audio module 170 in FIG. 1), a sensor module 211 (e.g., the sensor module 176 in FIG. 1), key input devices 202, 203, and 204 (e.g., the input module 150 in FIG. 1), and a connector hole 209 (e.g., the connection terminal 178 in FIG. 1). In a certain embodiment, the electronic device 200 may exclude at least one (e.g., the key input devices 202, 203, and 204, the connector hole 209, and/or the sensor module 211) of the elements or further include other elements.

The display 220 may be visible through, for example, the most of the front plate 201. The display 220 may have a shape corresponding to the shape of the front plate 201 and may have various shapes such as circular, oval, and/or polygonal. The display 220 may be combined with or disposed adjacent to a touch detection circuit, a pressure sensor capable of measuring the strength (pressure) of a touch, and/or a fingerprint sensor.

The audio modules 205 and 208 may include a microphone hole 205 and a speaker hole 208. A microphone may be disposed inside the microphone hole 205 to acquire external sounds, and in a certain embodiment, a plurality of microphones may be disposed to detect the direction of sound. The speaker hole 208 may be used as an external speaker and a receiver for calls. In a certain embodiment, the speaker hole 208 and the microphone hole 205 may be implemented as one hole, or a speaker (e.g., a piezo speaker) may be included without the speaker hole 208.

The sensor module 211 may generate electrical signals and/or data values corresponding to the internal operation state of the electronic device 200 or the external environmental state. The sensor module 211 may include, for example, a biometric sensor module 211 (e.g., an HRM sensor) disposed on the second surface 210B of the housing 210. The electronic device 200 may further include a sensor module that is not shown, for example, at least one of a Hall sensor (e.g., a Hall IC), a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, and/or an illumination sensor.

The key input devices 202, 203, and 204 may include an annular member 202 (e.g., a bezel housing, a rotatable wheel, or a wheel key) that is disposed on the first surface 210A of the housing 210 and rotatable in at least one direction, and/or side key buttons 203 and 204 (e.g., physical buttons) disposed on the side surface 210C of the housing 210. The annular member 202 may have a shape corresponding to the shape of the front plate 201. The annular member 202 may rotate clockwise or counterclockwise around the center of the display 220. In another embodiment, the electronic device 200 may exclude some or all of the key input devices 202, 203, and 204 mentioned above, and the excluded key input devices 202, 203, and 204 may be implemented in other forms such as soft keys on the display 220. The connector hole 209 may accommodate a connector (e.g., a USB connector) for transmitting and receiving power and/or data to and from an external electronic device (e.g., the electronic devices 102 and 104 in FIG. 1), and another connector hole (not shown) capable of accommodating a connector for transmitting and receiving audio signals to and from an external electronic device. The electronic device 200 may further include, for example, a connector cover (not shown) that covers at least a portion of the connector hole 209 and blocks external foreign substances from entering the connector hole.

The fastening members 250 and 260 may be detachably fastened to at least a portion of the housing 210 using locking members 251 and 261. The fastening members 250 and 260 may include one or more of a fixing member 252, a fixing member connection hole 253, a band guide member 254, and a band fixing ring 255. The fixing member 252 may be configured to fix the housing 210 and the fastening members 250 and 260 to a user's body part (e.g., a wrist, an ankle, or the like). The fixing member connection hole 253 may fix the housing 210 and the fastening members 250 and 260 to a user's body part, corresponding to the fixing member 252. The band guide member 254 may be configured to limit the range of movement of the fixing member 252 when the fixing member 252 is fastened to the fixing member connection hole 253, so that the fastening members 250 and 260 are tightly attached and fastened to the user's body part. The band fixing ring 255 may limit the range of movement of the fastening members 250 and 260 in the state in which the fixing member 252 and the fixing member connection hole 253 are fastened.

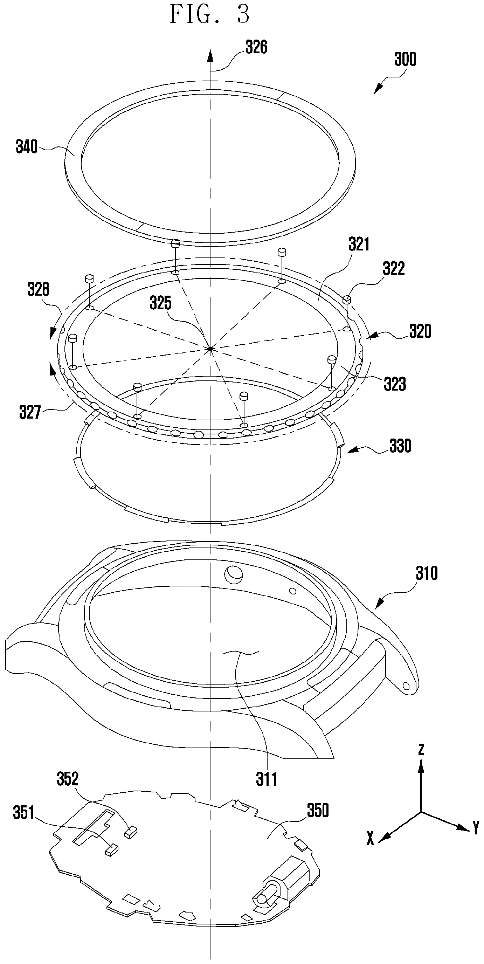

FIG. 3 is an exploded perspective view of an electronic device 300 (e.g., the electronic device 200 in FIG. 2A) according to various embodiments of the disclosure.

The electronic device 300 in FIG. 3 may be at least partially similar to the electronic device 200 in FIG. 2A or may further include other embodiments of the electronic device. In describing the drawings, a connection member similar to that in FIG. 2A may be applied to the electronic device 300 in FIG. 3, but will be omitted for convenience of description.

Referring to FIG. 3, the electronic device 300 may include a housing 310 (e.g., the housing 210 in FIG. 2A) including a circular opening 311, and an annular member 320 (e.g., the annular member 202 in FIG. 2A) and a decorative member 340 that are sequentially stacked along the rim of the opening 311 of the housing 310. According to an embodiment, an interface 330 may be disposed between the annular member 320 and the housing 310. According to an embodiment, the interface 330 may be at least partially fixed to the housing 310 and may serve to guide the annular member 320 to rotate. According to an embodiment, a substrate 350 (e.g., a printed circuit board (PCB), a flexible printed circuit board (FPCB), or the like) may be disposed in the inner space of the housing 310, and the substrate 350 may have at least one sensor module (e.g., the sensor module 176 in FIG. 1, a first Hall sensor 351, and/or a second Hall sensor 352) disposed thereon to detect magnetic information produced based on a plurality of magnetic members 322 arranged on the annular member 320. According to an embodiment, the sensor module may include at least one Hall sensor (Hall IC) (e.g., a first Hall sensor 351 and/or a second Hall sensor 352) disposed on the substrate 450.

According to various embodiments, the annular member 320 may be formed in a shape that generally corresponds to a first surface 312 of the housing 310. According to an embodiment, the annular member 320 may include a first surface 321 directed in the opposite direction of gravity (e.g., the z-axis direction) with respect to the housing 310 and a second surface 323 that is directed in the gravity direction (e.g., the -z-axis direction) with respect to the housing 310 and at least partially faces the housing 310. According to an embodiment, a plurality of magnetic members 322 may be disposed at regular intervals on at least one of the first surface 321 or the second surface 323 of the annular member 320. According to an embodiment, the plurality of magnetic members 322 may be disposed at regular intervals to have the same angle around the center 325 of the annular member 320. For example, if there are four magnetic members 322, they may be disposed at about every 90 degrees, and if there are eight magnetic members 322, they may be disposed at about every 45 degrees.

According to an embodiment, the annular member 320 may at least partially rotate in one of the clockwise direction 327 or the counterclockwise direction 328 about the central axis 326. According to an embodiment, when the annular member 320 rotates, the first Hall sensor 351 and the second Hall sensor 352 may detect magnetic information produced based on at least one magnetic member 322.

According to an embodiment, the first Hall sensor 351 and the second Hall sensor 352 may be disposed in the inner space of the electronic device 300, and may detect and calculate information about the magnetic force formed around the electronic device 300. According to an embodiment, the magnetic member 322 may be inserted and fixed to the first surface 321 so as to match the first surface 321 of the annular member 320, and the decorative member 340 may be disposed to cover the magnetic member 322 in the direction of gravity (e.g., the -z-axis direction). According to an embodiment, the magnetic members 322 may be disposed at eight places at regular intervals along the first surface 321 of the annular member 320, but are not limited thereto.

According to an embodiment, the interface 330 may be formed annular and at least partially fixed to the first surface 321 of the housing 310 so as to guide the annular member 320 to rotate in one of the clockwise direction 327 or the counterclockwise 328 direction. According to an embodiment, when the interface 330 is also fixed to the housing 310 and guides the rotation of the annular member 320, it may act as a lubricating member to reduce friction.

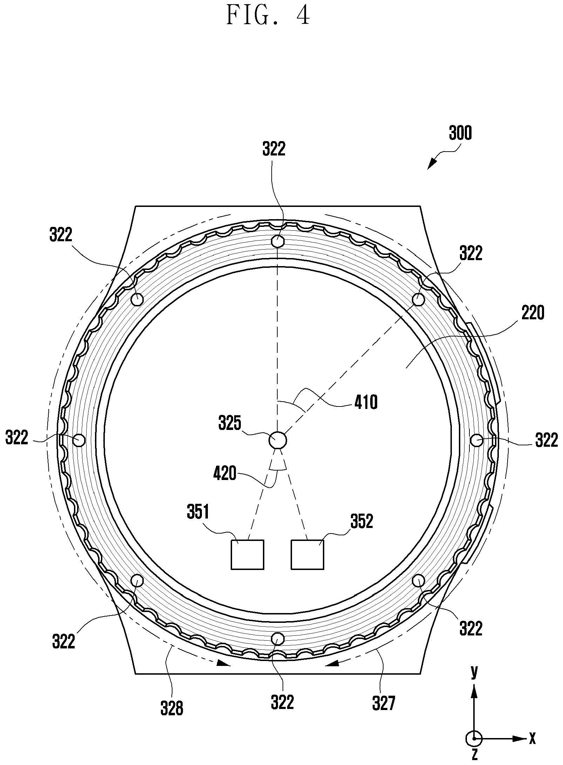

FIG. 4 is a diagram illustrating an example of at least one magnetic member 322 disposed in an annular member 320 of an electronic device 300 and at least two Hall sensors (e.g., the first Hall sensor 351 and/or the second Hall sensor 352) disposed in the inner space of the electronic device 300 according to various embodiments of the disclosure.

Referring to FIG. 4, the annular member 320 (e.g., the annular member 202 in FIG. 2A) may be disposed in a housing 310 to surround the rim of the display 220. The annular member 320 may at least partially rotate in one of the clockwise direction 327 or the counterclockwise direction 328 about the center 325 (e.g., the z-axis). According to an embodiment, the annular member 320 may include at least one magnetic member 322 applied as a detected member for detecting rotation parameters (e.g., rotation direction, rotation angle, rotation speed, and/or the amount of rotation) of the annular member 320. According to an embodiment, at least two Hall sensors (e.g., the first Hall sensor 351 and/or the second Hall sensor 352) for detecting the rotation parameters of the annular member 320 may be disposed in the inner space of the electronic device 300.

According to an embodiment, at least one or more magnetic members 322 may be disposed at an interval of the same angle around the center 325 of the annular member 320. For example, at least one or more magnetic members 322 may be disposed at a predetermined first distance from the center 325 and may be disposed at equal intervals. Referring to FIG. 4, at least one or more magnetic members 322 may be disposed at every first angle 410 (e.g., about 45 degrees), and may be implemented as a total of eight magnetic members 322. According to an embodiment, the number of magnetic members 322 is not limited.

According to an embodiment, at least two Hall sensors (e.g., the first Hall sensor 351 and/or the second Hall sensor 352) may be disposed to be spaced apart from each other at a second angle 420 (e.g., about 22.5 degrees) therebetween. According to an embodiment, the first Hall sensor 351 and the second Hall sensor 352 may be disposed to be spaced apart from each other at a second angle 420, which is less than the first angle 410, therebetween in order to detect the movement of at least one magnetic member 322. The first Hall sensor 351 and the second Hall sensor 352 may be disposed at a predetermined second distance from the center 325. For example, the second angle 420 may be approximately half of the first angle 410. According to an embodiment, the first Hall sensor 351 and the second Hall sensor 352 may be disposed closer to the center 325 than at least one magnetic member 322.

According to various embodiments, the electronic device 300 may acquire magnetic information formed by at least one magnetic member 322 using the first Hall sensor 351 and the second Hall sensor 352, and identify the movement of the annular member 320, based on the acquired magnetic information. The first Hall sensor 351 may acquire first magnetic information, and the second Hall sensor 352 may acquire second magnetic information. The magnetic information may include the x-magnetic force corresponding to the x-axis direction, the y-magnetic force corresponding to the y-axis direction, and/or the z-magnetic force corresponding to the z-axis direction, based on the Hall sensor (e.g., the first Hall sensor 351 and/or the second Hall sensor 352). For example, the electronic device 300 may identify whether the annular member 320 rotates in the clockwise direction 327 or in the counterclockwise direction 328 around the center 325.

According to an embodiment, the electronic device 300 may continuously identify the movement of the annular member 320 in real time, based on the acquired magnetic information (e.g., a difference value between first magnetic information and second magnetic information). For example, the electronic device 300 may identify the movement of the annular member 320 at every minimum angle (e.g., about 1 degree). According to an embodiment, the electronic device 300 may identify the relative rotation angle (e.g., about -22.5 degrees to about +22.5 degrees), based on the current position of the annular member 320, or identify the absolute rotation angle (e.g., about 0 degrees to about 360 degrees), based on the predetermined original position thereof.

According to an embodiment, the electronic device 300 may control the display of a user interface, based on the rotational movement of the annular member 320, and enable smooth screen switching when switching the screen. The electronic device 300 may control the display module 160 such that the screen switches smoothly like an animation even when the screen is enlarged (e.g., zoom-in) or reduced (e.g., zoom-out).

According to an embodiment, when defining the electronic device 300 as a watch-type wearable electronic device, the x-axis direction may refer to the 3 o'clock direction around the center 325 of the watch, and the y-axis direction may refer to the 12 o'clock direction around the center 325 of the watch. The z-axis direction may indicate the opposite direction of gravity when the electronic device 300 is disposed parallel to the ground. For example, the direction of gravity may be the -z-axis direction.

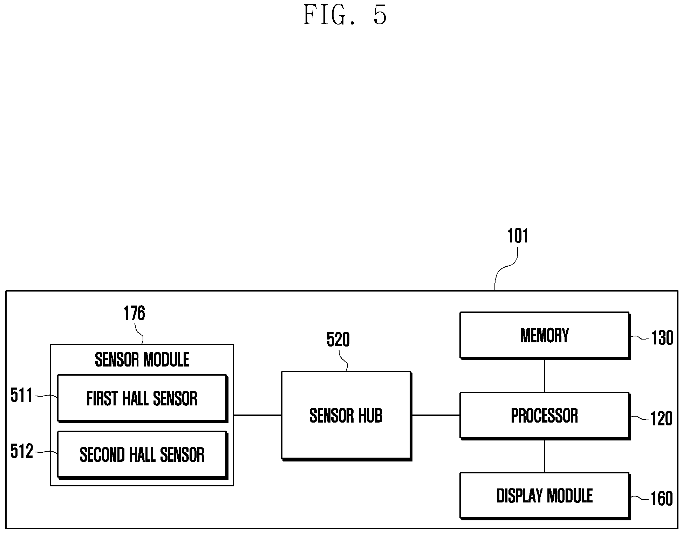

FIG. 5 is a block diagram of an electronic device 101 according to various embodiments of the disclosure.

The electronic device 101 in FIG. 5 (e.g., the electronic device 101 in FIG. 1) may be at least partially similar to the electronic device 200 in FIG. 2A, or may further include other embodiments of the electronic device.

According to an embodiment, the electronic device 101 may include a watch-type wearable electronic device in which an annular member (the annular member 202 in FIG. 2A) is at least partially disposed in a housing (e.g., the housing 210 in FIG. 2A) including a circular opening. At least one or more magnetic members (e.g., the magnetic members 322 in FIG. 3) may be disposed at regular intervals in the annular member 202, and the at least one or more magnetic members 322 may form a magnetic field around the annular member 202.

Referring to FIG. 5, the electronic device 101 may include a processor 120 (e.g., the processor 120 in FIG. 1), a memory 130 (e.g., the memory 130 in FIG. 1), a display module 160 (e.g., the display module 160 in FIG. 1 or the display 220 in FIG. 2A), a sensor module 176 (e.g., the sensor module 176 in FIG. 1), and/or a sensor hub 520 (real time OS (RTOS)). The sensor module 176 may include a first Hall sensor 511 (e.g., the first Hall sensor 351 in FIG. 3) and a second Hall sensor 512 (e.g., the second Hall sensor 352 in FIG. 3).

The processor 120 may execute a program (e.g., the program 140 in FIG. 1) stored in the memory 130 to control at least one other element (e.g., hardware or software elements) and perform processing of a variety of data or calculations. For example, the processor 120 may acquire magnetic information, based on a magnetic field formed by at least one magnetic member 322, and calculate rotation parameters (e.g., rotation direction, rotation angle, rotation speed, and/or the amount of rotation) of the annular member 202, based on the acquired magnetic information.

The memory 130 may store or update necessary data when calculating the rotation parameters of the annular member 202. The memory 130 may store magnetic information of at least one magnetic member 322. For example, the processor 120 may calculate the rotation parameters of the annular member 202, based on the magnetic information stored in the memory 130.

The display module 160 may be disposed inside the opening of the housing so as to be at least partially surrounded by the annular member 202. The display module 160 may display a user interface, based on the movement (e.g., rotation parameters) of the annular member 202. For example, if the annular member 202 rotates in a first direction (e.g., the clockwise direction 327 in FIG. 4), the processor 120 may control the display module 160 such that the user interface is displayed to rotate in the first direction as well.

The sensor module 176 may include a Hall sensor (e.g., a first Hall sensor 511 and a second Hall sensor 512) to detect the movement of the annular member 202. The sensor module 176 may be disposed in the inner space of the electronic device 101 and may acquire magnetic information of a magnetic field formed by at least one magnetic member 322 disposed on the annular member 202. The first Hall sensor 511 and the second Hall sensor 512 may be disposed at a predetermined distance from the center of the opening (e.g., the center 325 in FIG. 4). The first Hall sensor 511 and the second Hall sensor 512 may be disposed to be spaced apart from each other at a predetermined angle therebetween with respect to the center. For example, the magnetic members 322 adjacent to each other may be disposed to be spaced apart from each other at a first angle (e.g., the first angle 410 in FIG. 4) therebetween with respect to the center 325, and the first Hall sensor 511 and The second Hall sensor 512 may be disposed to be spaced apart from each other at a second angle (e.g., the second angle 420 in FIG. 4) therebetween with respect to the center 325. According to an embodiment, the second angle 420 may be set smaller than the first angle 410. For example, the second angle 420 may be approximately half of the first angle 410.

According to an embodiment, the processor 120 may acquire first magnetic information, based on the first Hall sensor 511, and acquire second magnetic information, based on the second Hall sensor 512. The processor 120 may implement a magnetic information graph, based on a difference value between the first magnetic information and the second magnetic information, and identify the movement (e.g., rotation parameters) of the annular member 202, based on the magnetic information graph. For example, in the case where at least one or more magnetic members 322 are disposed at about every 45 degrees in the annular member 202, a magnetic information graph in a similar pattern may be implemented at about every 45 degrees. According to an embodiment, the processor 120 may continuously identify the movement of the annular member 320 in real time, based on the magnetic information graph, and detect the movement of the annular member 320 at every minimum angle (e.g., about 1 degree).

The sensor hub 520 may include modules and circuits that subdivide magnetic information into magnetic force values corresponding to specific directions (e.g., the x-axis/y-axis/z-axis directions). For example, the sensor hub 520 may divide the first magnetic information acquired through the first Hall sensor 511 into an x-magnetic force value corresponding to the x-axis direction, a y-magnetic force value corresponding to the y-axis direction, and/or a z-magnetic force value corresponding to the z-axis direction, based on the first Hall sensor 511. The sensor hub 520 may transmit the first magnetic force value (e.g., an x-magnetic force value, a y-magnetic force value, and a z-magnetic force value) based on the first magnetic information and the second magnetic force value (e.g., an x'-magnetic force value, a y'-magnetic force value, and a z'-magnetic force value) based on the second magnetic information to the processor 120. The processor 120 may implement a magnetic information graph, based on the difference value between the first magnetic force value and the second magnetic force value. For example, the magnetic information graph may include an x-graph showing the difference value between the x-magnetic force value and the x'-magnetic force value, a y-graph showing the difference value between the y-magnetic force value and the y'-magnetic force value, and/or a z-graph showing the difference value between the z-magnetic force value and the z'-magnetic force value. According to an embodiment, the sensor hub 520 may be implemented to be at least partially coupled to the processor 120.

According to an embodiment, the processor 120 of the electronic device 101 may acquire magnetic information of a magnetic field formed based on at least one magnetic member 322 disposed on the annular member 202 using a Hall sensor (e.g., the first Hall sensor 511 and the second Hall sensor 512). For example, the processor 120 may acquire first magnetic information using the first Hall sensor 511 and acquire second magnetic information using the second Hall sensor 511. The processor 120 may subdivide the acquired first magnetic information and second magnetic information so as to correspond to specific directions (e.g., the x-axis/y-axis/z-axis directions) by the sensor hub 520. The processor 120 may detect movement (e.g., rotation parameters (e.g., rotation direction, rotation angle, rotation speed, and/or the amount of rotation)) of the annular member 202, based on the subdivided magnetic information. According to an embodiment, the processor 120 may continuously identify the movement of the annular member 320 in real time. The processor 120 may control the display module 160 such that the user interface smoothly switches based on the movement of the annular member 320.

According to various embodiments, an electronic device 101 may include a front cover (e.g., the front plate 201), a rear cover (e.g., the rear plate 207) disposed on the opposite side of the front cover 201, an annular member 202 that is a side member (e.g., the housing 210) at least partially surrounding a space between the front cover 201 and the rear cover 207 and includes a display (e.g., the display module 160 or the display 220) disposed at least partially along the front cover 201 and at least one magnetic member 322 disposed at a predetermined first angle 410 and a predetermined first distance with respect to the center of the display 220, a first Hall sensor 351 disposed to be spaced a predetermined second distance apart from the center of the display 220, a second Hall sensor 352 disposed to be spaced the predetermined second distance apart from the center of the display 220 and disposed to be spaced apart from the first Hall sensor 351 at a second angle 420, which is smaller than the first angle 410, therebetween, a memory 130, and a processor 120 operatively connected to the memory 130. The processor 120 may acquire first magnetic information corresponding to the at least one magnetic member, based on the first Hall sensor 351, acquire second magnetic information corresponding to the at least one magnetic member, based on the second Hall sensor 352, identify whether or not the annular member 202 rotates, based on the first magnetic information and the second magnetic information, and control a user interface displayed through the display 220 in response to the rotation.

According to an embodiment, the first magnetic information may be calculated based on the magnetic field formed by the at least one magnetic member 322, based on the first Hall sensor 351, and the second magnetic information may be calculated based on the magnetic field formed by the at least one magnetic member 322, based on the second Hall sensor 352.

According to an embodiment, the first magnetic information and the second magnetic information may include a magnetic force value corresponding to at least one axial direction (e.g., the x-axis direction, the y-axis direction, and the z-axis direction).

The electronic device 101 according to an embodiment may further include a sensor hub 520, the first magnetic information may be divided into an x-magnetic force value corresponding to the x-axis direction, a y-magnetic force value corresponding to the y-axis direction, and a z-magnetic force value corresponding to the z-axis direction through the sensor hub 520, and the second magnetic information may be divided into an x'-magnetic force value corresponding to the x-axis direction, a y'-magnetic force value corresponding to the y-axis direction, and a z'-magnetic force value corresponding to the z-axis direction through the sensor hub 520.

According to an embodiment, the processor 120 may calculate an x-difference value between the x-magnetic force value and the x'-magnetic force value, a y-difference value between the y-magnetic force value and the y'-magnetic force value, and a z-difference value between the z-magnetic force value and z'-magnetic force value, and identify whether or not the annular member 202 rotates based on at least one of the x-difference value and the y-difference value, and the z-difference value.

According to an embodiment, the processor 120 may identify a rotation angle of the annular member 202 corresponding to the x-difference value, the y-difference value, and the z-difference value, based on magnetic information graph stored in the memory 130.

According to an embodiment, the processor 120 may identify a rotation speed of the annular member 202 corresponding to the x-difference value, the y-difference value, and the z-difference value, based on magnetic information graph stored in the memory 130, and control the user interface displayed through the display 220, based on the identified rotation speed.

According to an embodiment, the magnetic information graph may have graphs of similar patterns repeated at every angle range corresponding to the first angle 410.

According to an embodiment, the processor 120 may identify a section angle and a relative angle for the annular member 202, based on the first magnetic information and the second magnetic information, and calculate an absolute angle according to the rotation of the annular member 202, based on the identified section angle and relative angle.

According to an embodiment, the processor 120 may identify a relative rotation angle of the annular member 202, based on the identified relative angle.

According to an embodiment, the relative angle may be determined based on an angle range corresponding to the first angle 410.

According to an embodiment, the second angle 420 may be configured to be smaller than the first angle 410 and may include an angle corresponding to half of the first angle 410.

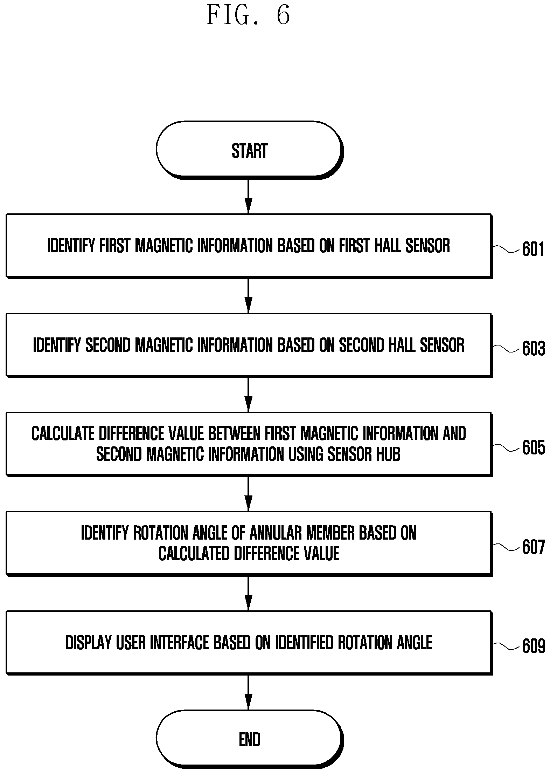

FIG. 6 is a flowchart illustrating a method of identifying the rotation angle of an annular member, based on at least two Hall sensors, according to various embodiments of the disclosure.

An electronic device 101 in FIG. 6 (e.g., the electronic device 101 in FIG. 1) may be at least partially similar to the electronic device 200 in FIG. 2A, or may further include other embodiments of the electronic device.

According to an embodiment, the electronic device 101 may include a watch-type wearable electronic device in which an annular member (the annular member 202 in FIG. 2A) is at least partially disposed in a housing (e.g., the housing 210 in FIG. 2A) including a circular opening. At least one or more magnetic members (e.g., the magnetic members 322 in FIG. 3) may be disposed at regular intervals on the annular member 202, and the at least one or more magnetic members 322 may form a magnetic field around the annular member 202. The electronic device 101 may include a Hall sensor (e.g., the first Hall sensor 351 and the second Hall sensor 352 in FIG. 3) in the inner space to detect the movement of the annular member 202.

In operation 601, a processor 120 (e.g., the processor 120 in FIG. 1) of the electronic device 101 may identify first magnetic information, based on the first Hall sensor 351. For example, at least one magnetic member 322 disposed on the annular member 202 may form a magnetic field around the same. If the annular member 202 rotates in a specific direction, the magnetic field formed therearound may vary. For example, during the rotational movement of the annular member 202, at least one magnetic member 322 may approach or move away from the first Hall sensor 351, so that the magnetic field may vary. The processor 120 may acquire first magnetic information corresponding to the formed magnetic field, based on the first Hall sensor 351.

In operation 603, the processor 120 may identify second magnetic information, based on the second Hall sensor 352. According to an embodiment, at least one or more magnetic members 322 may be disposed at every first angle (e.g., the first angle 410 in FIG. 4) on the annular member 202. The first Hall sensor 351 and the second Hall sensor 352 may be disposed to be spaced apart from each other at a second angle (e.g., the second angle 420 in FIG. 4) therebetween. The first Hall sensor 351 and the second Hall sensor 352 may be disposed to be spaced apart from each other at a second angle, which is smaller than the first angle 410, therebetween in order to precisely detect the movement of at least one magnetic member 322. For example, the second angle 420 may be approximately half of the first angle 410.

In operation 605, the processor 120 may calculate a difference value between the first magnetic information and the second magnetic information using a sensor hub (e.g., the sensor hub 520 in FIG. 4). According to an embodiment, the sensor hub 520 may be an element that subdivides the magnetic information into magnetic force values corresponding to specific directions (e.g., the x-axis/y-axis/z-axis directions). For example, the processor 120 may divide the first magnetic information acquired in operation 601 into an x-magnetic force value corresponding to the x-axis direction, a y-magnetic force value corresponding to the y-axis direction, and/or a z-magnetic force value corresponding to the z-axis direction by the sensor hub 520. The processor 120 may divide the second magnetic information acquired in operation 603 into an x'-magnetic force value corresponding to the x-axis direction, a y'-magnetic force value corresponding to the y-axis direction, and/or a z'-magnetic force value corresponding to the z-axis direction by the sensor hub 520. According to an embodiment, the processor 120 may calculate an x-difference value between the x-magnetic force value and the x'-magnetic force value, a y-difference value between the y-magnetic force value and the y'-magnetic force value, a z-difference value between the z-magnetic force value and the z'-magnetic force value.

In operation 607, the processor 120 may identify the rotation angle of the annular member 202, based on the calculated difference values (e.g., the x-difference value, the y-difference value, and the z-difference value). According to an embodiment, the electronic device 101 may pre-store data (e.g., x-difference values, y-difference values, and/or z-difference values) related to the first magnetic information and the second magnetic information as a lookup table in the memory 130. For example, the lookup table may include data enabling identification of the rotation angle of the annular member 202, corresponding to the x-difference value, the y-difference value, and/or the z-difference value. The processor 120 may implement a magnetic information graph including an x-graph corresponding to the x-difference value, a y-graph corresponding to the y-difference value, and a z-graph corresponding to the z-difference value, based on the look-up table. In operation 607, the processor 120 may identify the rotation angle of the annular member 202 corresponding to the difference values (e.g., the x-difference value, the y-difference value, and/or the z-difference value) calculated in operation 605, based on the magnetic information graph. According to another embodiment, the processor 120 may identify the rotation angle of the annular member 202 in real time and identify the rotation direction of the annular member 202, based on the amount of change in the rotation angle. For example, if the rotation angle gradually increases, the processor 120 may identify that the annular member 202 is rotating in a first direction (e.g., the clockwise direction 327 in FIG. 4). If the rotation angle gradually decreases, the processor 120 may identify that the annular member 202 is rotating in a second direction (e.g., the counterclockwise direction 328 in FIG. 4).

In operation 609, the processor 120 may display a user interface, based on the identified rotation angle. According to an embodiment, the processor 120 may identify the rotation angle of the annular member 202, based on the magnetic information graph, and also identify the rotation direction of the annular member 202, based on the identified rotation angle. The processor 120 may perform control such that the user interface moves flexibly, based on the identified rotation angle and rotation direction. For example, in the case where the annular member 202 rotates in the first direction (e.g., the clockwise direction 327 in FIG. 4), the processor 120 may control the display module 160 such that the user interface is displayed to rotate in the first direction as well. As another example, in the case where the annular member 202 rotates in the first direction, if a navigation application is running, the processor 120 may enlarge a displayed map. While the navigation app is running, the processor 120 may enlarge the map in response to the rotational movement in the first direction (e.g., the clockwise direction) and reduce the map in response to the rotational movement in the second direction (e.g., the counterclockwise direction). According to an embodiment, the processor 120 may be configured to identify a running application and execute at least one function corresponding to the application in response to the rotational movement of the annular member 202.

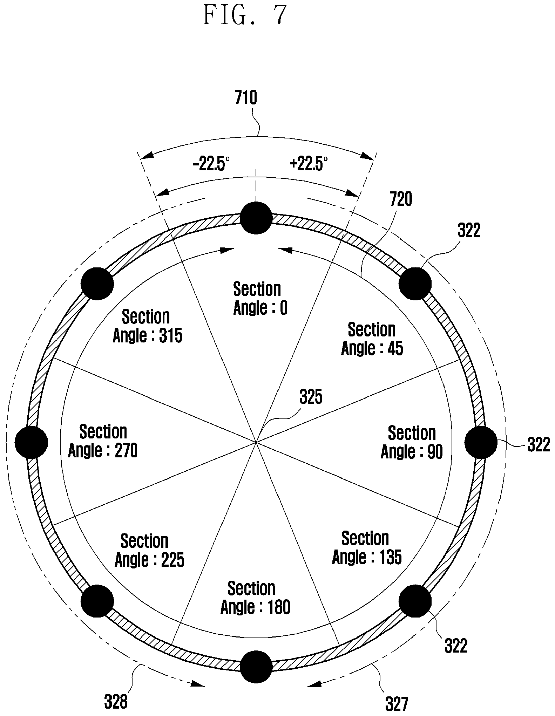

FIG. 7 is a diagram illustrating an example of a method of calculating the rotation angle of an annular member using two pieces of angle data (e.g., rotation area information and relative angle information) according to various embodiments of the disclosure.

According to an embodiment, a processor (e.g., the processor 120 in FIG. 1) of an electronic device 101 (e.g., the electronic device 101 in FIG. 1) may identify first magnetic information based on a first Hall sensor (e.g., the first Hall sensor 351 in FIG. 3) and second magnetic information based on a second Hall sensor (e.g., the second Hall sensor 352 in FIG. 3), and identify whether or not an annular member (e.g., the annular member 202 in FIG. 2A) rotates, based on a difference value between the first magnetic information and the second magnetic information. The processor 120 may identify rotation area information and relative angle information corresponding to the rotational movement of the annular member and calculate the absolute angle of the annular member, based on the rotation area information and the relative angle information.

Referring to FIG. 7, the electronic device 101 may include at least one or more magnetic members (e.g., the magnetic members 322 in FIG. 3) disposed at every first angle (e.g., about 45 degrees) with respect to the center 325 of a display module (e.g., the display module 160 in FIG. 1). The electronic device 101 may include a first Hall sensor 351 and a second Hall sensor 352 disposed in the inner space thereof so as to be spaced apart from each other at a second angle (e.g., about 22.5 degrees) therebetween with respect to the center 325 of a display module 160. For example, the second angle 420 may be approximately half of the first angle 410. The electronic device 101 may identify magnetic information about the magnetic field formed by at least one magnetic member 322 and implement a magnetic information graph corresponding to the identified magnetic information. For example, the magnetic information graph may be a graph in a similar pattern or produce difference calculation values at every first angle (e.g., about 45 degrees or the first angle 410 in FIG. 4) at which the magnetic members 322 are disposed.

According to an embodiment, the rotation angle may include a relative angle indicating that the annular member 202 has rotated within a predetermined first range 710 (e.g., about -22.5 degrees to about +22.5 degrees), based on the current position of the annular member 202, and a section angle indicating that the annular member 202 has rotated within a predetermined second range 720 (e.g., about 0 degrees to about 360 degrees), based on a predetermined section at booting. According to an embodiment, the relative angle may include a rotation angle relative to the current position of the annular member 202, and the section angle may include an approximate rotation angle of the annular member 202 based on a predetermined section. According to an embodiment, the absolute rotation angle of the annular member 202 may be calculated based on the relative angle and the section angle.

According to an embodiment, the processor 120 may independently calculate the relative angle and the section angle. For example, the relative angle may increase if the annular member 202 rotates in the first direction 327 (e.g., the clockwise direction) and decrease if the annular member 202 rotates in the second direction 328 (e.g., the counterclockwise direction), based on the first range 710 (e.g., about -22.5 degrees to about +22.5 degrees). The relative angle may be calculated continuously based on the first range 710 and indicate an angle at which the annular member 202 has moved relative to the current position thereof. The section angle may be divided into a plurality of sections (areas) corresponding to the positions where at least one or more magnetic members 322 are disposed when the electronic device 101 is booted. For example, the processor 120 may set one section to 0 when booting, and multiple sections may be configured based on the second range 720 (e.g., about 0 degrees to about 360 degrees). For example, in the case where a total of eight magnetic members 322 are disposed at every 45 degrees, a total of eight sections (e.g., first to eighth sections) may be configured at about every 45 degrees. For example, the first section may be configured at approximately 0 degrees, the second section may be configured at approximately 45 degrees, and the eighth section may be configured at approximately 315 degrees. The section angle may be calculated discontinuously based on the second range 720.

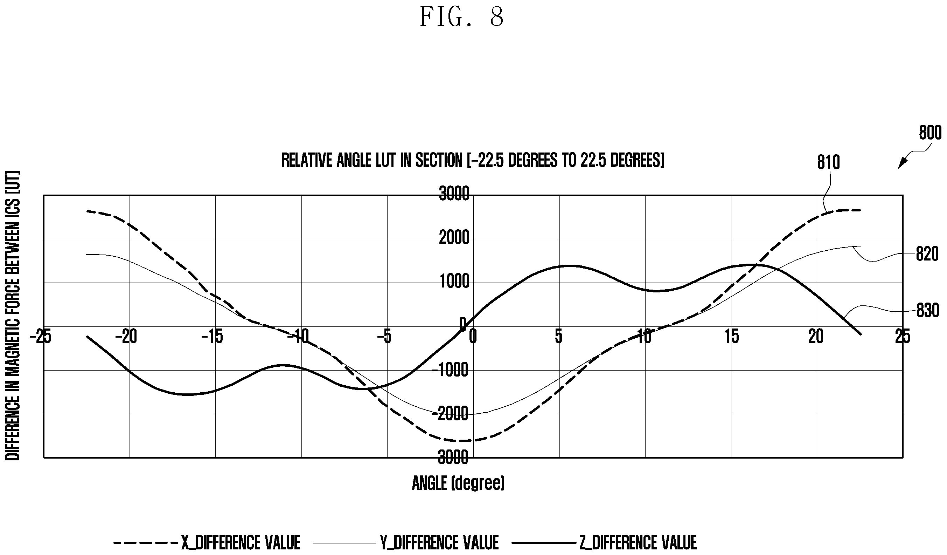

FIG. 8 is a graph showing an x-magnetic force value corresponding to the x-axis, a y-magnetic force value corresponding to the y-axis, and/or a z-magnetic force value corresponding to the z-axis, based on magnetic information acquired by rotation of the annular member, according to various embodiments of the disclosure.

According to an embodiment, a processor (e.g., the processor 120 in FIG. 1) of an electronic device 101 (e.g., the electronic device 101 in FIG. 1) may identify first magnetic information based on a first Hall sensor (e.g., the first Hall sensor 351 in FIG. 3) and second magnetic information based on a second Hall sensor (e.g., the second Hall sensor 352 in FIG. 3), and identify a rotation angle of an annular member (e.g., the annular member 202 in FIG. 2A), based on a difference value between the first magnetic information and the second magnetic information.

Referring to FIG. 8, the first magnetic information may include an x-magnetic force value corresponding to the x-axis direction, a y-magnetic force value corresponding to the y-axis direction, and/or a z-magnetic force value corresponding to the z-axis direction. The second magnetic information may include an x'-magnetic force value corresponding to the x-axis direction, a y'-magnetic force value corresponding to the y-axis direction, and/or a z'-magnetic force value corresponding to the z-axis direction.

The magnetic information graph 800 in FIG. 8 may include an x-graph 810 showing the difference value between the x-magnetic force value and the x'-magnetic force value, a y-graph 820 showing the difference value between the y-magnetic force value and the y'-magnetic force value, and/or a z-graph 830 showing the difference value between the z-magnetic force value and the z'-magnetic force value.

The magnetic information graph 800 is a graph showing the relative angle in FIG. 7. For example, the relative angle may represent the relative rotation angle of the annular member 202 within a first range (e.g., about -22.5 degrees to about +22.5 degrees or the first range 710 in FIG. 7).

According to an embodiment, the magnetic information graph 800 may be implemented based on data in the form of a look up table stored in a memory (e.g., the memory 130 in FIG. 1). For example, the lookup table may include data enabling identification of the rotation angle of the annular member 202, corresponding to the x-difference value, the y-difference value, and/or the z-difference value. According to an embodiment, the electronic device 101 may pre-store data related to the rotation angle corresponding to the x-difference value, y-difference value, and/or z-difference value in the memory 130. The electronic device 101 may implement a magnetic information graph 800, based on data related to the rotation angle stored in the memory 130. The electronic device 101 may identify a rotation angle matching the currently measured x-difference value, y-difference value, and/or z-difference value, based on the magnetic information graph 800.

According to an embodiment, the magnetic information graph 800 may be repeatedly implemented in a similar pattern at about every 45 degrees. According to an embodiment, the electronic device 101 may identify a relative angle corresponding to the acquired magnetic information by rotation of the annular member 202, based on the magnetic information graph 800. According to an embodiment, the electronic device 101 may accurately calculate the rotation angle for the annular member 202 by integrating the relative angle and the section angle. According to an embodiment, the electronic device 101 may identify the relative rotation angle of the annular member 202, based on the relative angle. According to an embodiment, the electronic device 101 may calculate the absolute rotation angle (e.g., an absolute angle) of the annular member 202 by considering both the relative angle and the section angle. According to an embodiment, the electronic device 101 may continuously calculate the rotation angle and identify the rotation direction, based on the amount of change in the rotation angle.

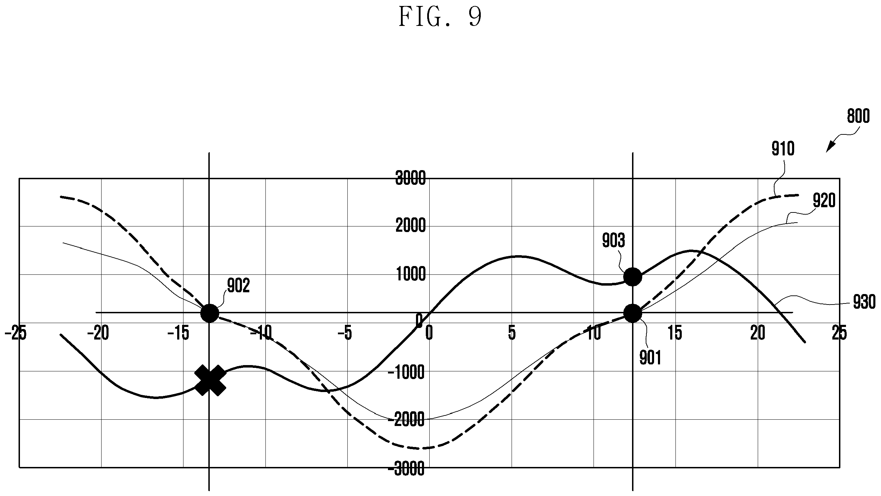

FIG. 9 is a graph illustrating the operation of calculating the rotation angle of an annular member according to various embodiments of the disclosure.

The magnetic information graph 900 in FIG. 9 may include an x-graph 910 showing the difference value between the x-magnetic force value and the x'-magnetic force value, a y-graph 920 showing the difference value between the y-magnetic force value and the y'-magnetic force value, and/or a z-graph 930 showing the difference value between the z-magnetic force value and the z'-magnetic force value. The magnetic information graph 900 may represent the rotation angle of the annular member 202 within a first range (e.g., about -22.5 degrees to about +22.5 degrees or the first range 710 in FIG. 7).

Referring to FIG. 9, the x-graph 910 and the y-graph 920 may be implemented in similar patterns. For example, the x-graph 910 and the y-graph 920 may be implemented to have similar patterns of increase and decrease, although there is a difference in the minimum magnetic force value and maximum magnetic force value.

For example, Assuming that the difference value (e.g., the x-difference value) between the x-magnetic force value and the x'-magnetic force value is about 91uT, that the difference value (e.g., the y-difference value) between the y-magnetic force value and the y'-magnetic force value is about 60uT, and that the difference value (e.g., the z-difference value) between the z-magnetic force value and the z'-magnetic force value is 840uT, a processor (e.g., the processor 120 in FIG. 1) of an electronic device 101 (e.g., the electronic device 101 in FIG. 1) may expect one of a first point 901 (e.g., about + 11 degrees) and a second point 902 (e.g., about -13 degrees) to be the rotation angle of the annular member 202, based on the x-difference value and the y-difference value. For example, since the x-graph 910 and the y-graph 920 are implemented in similar patterns, two rotation angles may be expected. The processor 120 may identify a third point 903 (e.g., about +11 degrees) corresponding to the z-difference value and identify that the annular member 202 has moved by about +11 degrees..

According to an embodiment, the electronic device 101 may compare and/or analyze at least one of the x-graph 910 and the y-graph 920 with the z-graph 930, and identify the rotation angle of the annular member 202. According to an embodiment, when comparing three graphs (e.g., the x-graph 910, the y-graph 920, and the z-graph 930), the electronic device 101 may accurately identify the rotation angle of the annular member 202.

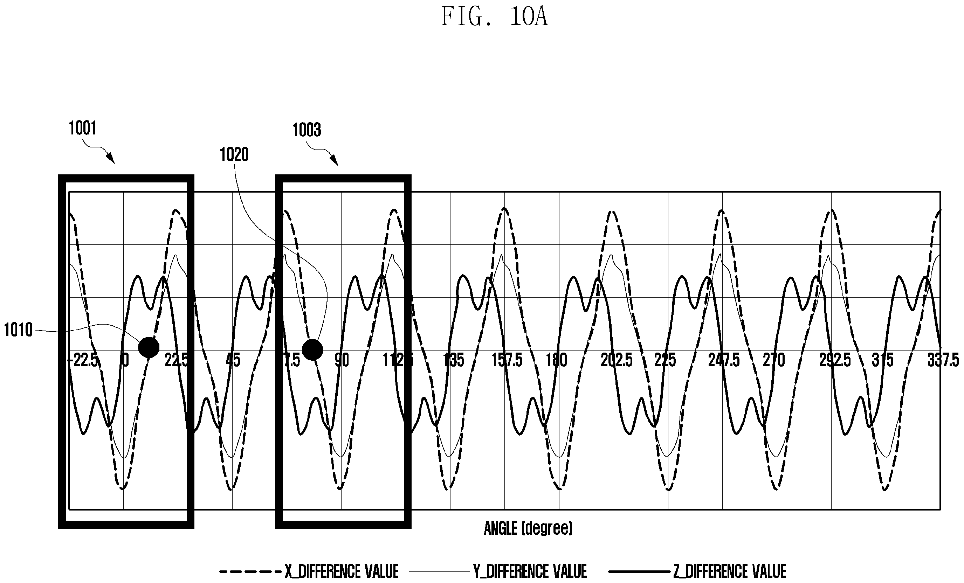

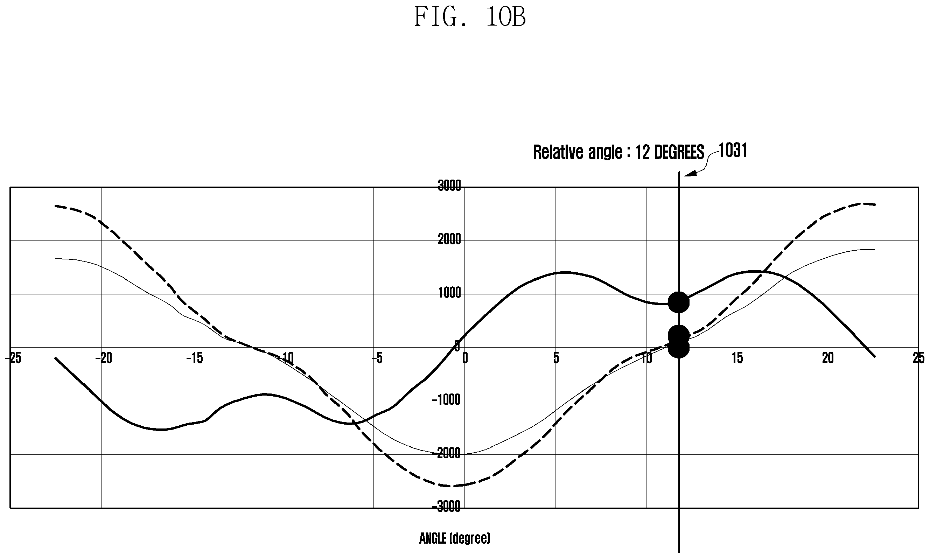

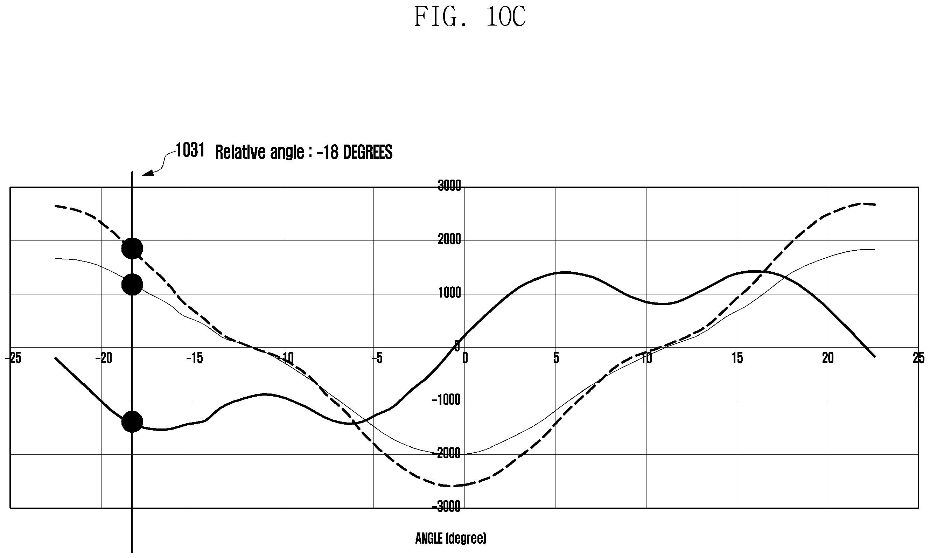

FIG. 10A is a graph showing a first point and a second point of an annular member according to various embodiments of the disclosure. FIG. 10B is a graph illustrating the operation of calculating the final angle according to a first point of an annular member according to various embodiments of the disclosure. FIG. 10C is a graph illustrating the operation of calculating the final angle according to a second point of an annular member according to various embodiments of the disclosure.

According to an embodiment, the angle of the annular member 202 may include a relative angle indicating the direction in which the annular member 202 has rotated within a predetermined first range 710 (e.g., about -22.5 degrees to about +22.5 degrees), based on the current position of the annular member 202, and a section angle indicating an approximate amount of rotation of the annular member 202 within a predetermined second range 720 (e.g., about 0 degrees to about 360 degrees), based on a predetermined section at booting.

Referring to FIG. 10A, for example, a first point 1010 may represent the movement of the annular member 202 that has moved by about +12 degrees in the first section 1001 configured at 0 degrees. A second point 1020 may represent the movement of the annular member 202 that has moved by about -18 degrees in the third section 1003 configured at 90 degrees.

Referring to FIG. 10B, a relative angle 1031 corresponding to the first point 1010 is shown. For example, the relative angle 1031 may be approximately +12 degrees. Referring to FIG. 10b, it is identified that the annular member 202 corresponding to the first point 1010 has moved by a relative angle 1031 (e.g., about +12 degrees) in the first section 1001 configured at about 0 degrees. According to an embodiment, the electronic device 101 may identify that the annular member 202 has rotated a total of 12 degrees (e.g., the absolute angle), based on the first point 1010.

Referring to FIG. 10C, a relative angle 1032 corresponding to the second point 1020 is shown. For example, the relative angle 1032 may be approximately - 18 degrees. Referring to FIG. 10c, it is identified that the annular member 202 corresponding to the second point 1020 has moved by a relative angle 1032 (e.g., about -18 degrees) in the third section 1003 configured at about 90 degrees. According to an embodiment, the electronic device 101 may identify that the annular member 202 has rotated a total of 72 degrees (e.g., the absolute angle), based on the second point 1020.

According to an embodiment, the electronic device 101 may identify first magnetic information based on a first Hall sensor (e.g., the first Hall sensor 351 in FIG. 3) and second magnetic information based on a second Hall sensor (e.g., the second Hall sensor 352 in FIG. 3), and calculate a difference value between the first magnetic information and the second magnetic information. The electronic device 101 may determine a point corresponding to the calculated difference value, based on the magnetic information graph stored in a memory (e.g., the memory 130 in FIG. 1), and identify a rotation angle corresponding to the determined point. The identified rotation angle may indicate the rotation angle at which the annular member 202 has moved in a first direction (e.g., the clockwise direction 327 in FIG. 4) and/or a second direction (e.g., the counterclockwise direction 328 in FIG. 4).

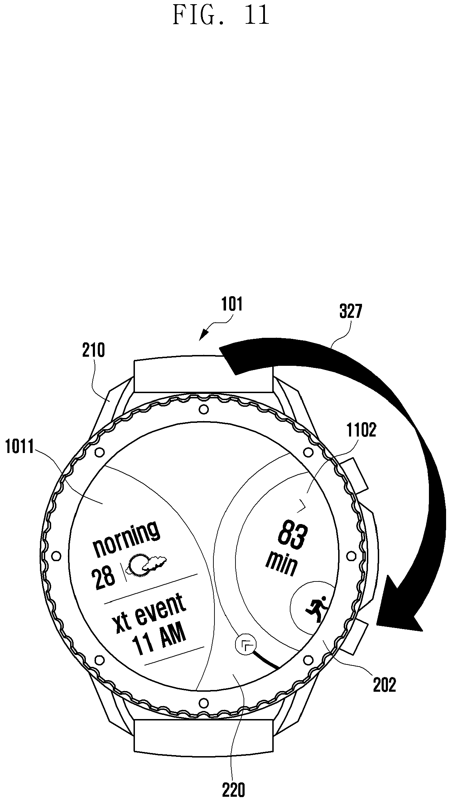

FIG. 11 is a diagram illustrating an example of an operation in which a user interface is displayed when an annular member rotates according to various embodiments of the disclosure.

According to an embodiment, the electronic device 101 may include a watch-type wearable electronic device in which an annular member (the annular member 202 in FIG. 2A) is at least partially disposed in a housing (e.g., the housing 210 in FIG. 2A) including a circular opening. A display 220 (e.g., the display module 160 in FIG. 1) may be disposed corresponding to the circular opening.

Referring to FIG. 11, the electronic device 101 may display a user interface through the display 220 and change the user interface being displayed in response to an external input. For example, the external input may include an input of rotating the annular member 202 of the electronic device 101 in a first direction (e.g., the clockwise direction 327 in FIG. 4) and/or in a second direction (e.g., the counterclockwise direction 328 in FIG. 4).

Referring to FIG. 11, the electronic device 101 may detect rotational movement of the annular member 202 while a first user interface 1101 is being displayed on the display 220. For example, the annular member 202 may be at least partially rotated in the first direction 327. The electronic device 101 may flexibly switch the first user interface 1101 to a second user interface 1102 in response to the rotational movement of the annular member 202. For example, the electronic device 101 may determine the speed of switching from the first user interface 1101 to the second user interface 1102, based on the speed at which the annular member 202 rotates. For example, the electronic device 101 may display switching from the first user interface 1101 to the second user interface 1102 such that the user feels that the switching is performed substantially at the same speed as the rotational movement speed of the annular member 202.

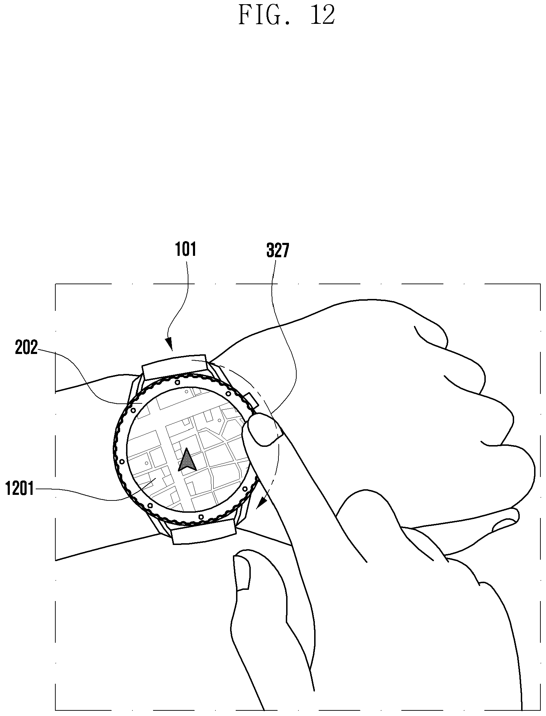

FIG. 12 is a diagram illustrating an example of an operation in which a map is enlarged and reduced when an annular member is rotated according to various embodiments of the disclosure.

The electronic device 101 in FIG. 12 may be at least partially similar to the electronic device 200 in FIG. 2A or may further include other embodiments of the electronic device. The electronic device 101 in FIG. 12 may include a watch-type wearable electronic device shown in FIG. 11.

Referring to FIG. 12, the electronic device 101 may execute a map-related application and display a map screen 1201 of the map-related application through the display 220. According to an embodiment, while the map screen 1201 is being displayed on the display 220, a processor (e.g., the processor 120 in FIG. 1) of the electronic device 101 may detect rotational movement of the annular member 202. For example, the annular member 202 may be rotated at least partially in a first direction 327 (e.g., the clockwise direction 327 in FIG. 4). The processor 120 may display the map screen 1201 to be enlarged in response to the rotational movement of the annular member 202. As another example, if the annular member 202 is rotated in a second direction 328 (e.g., the counterclockwise direction 328 in FIG. 4), the processor 120 displays the map screen 1201 to be reduced. According to an embodiment, the processor 120 may determine the degree to which the map screen 1201 is enlarged based on the degree of rotation of the annular member 202. For example, based on the rotation angle of the annular member 202, the processor 120 may determine the magnification ratio for the map screen 1201. According to an embodiment, the electronic device 101 may display the map screen 1201 such that the user may naturally feel the enlargement and reduction of the map screen 1201 to conform to the rotation angle of the annular member 202. The electronic device 101 may control the display module (e.g., the display module 160 in FIG. 1) such that the map screen 1201 switches smoothly like an animation when the map screen is enlarged (e.g., zoom-in) or reduced (e.g., zoom-out).

A method according to various embodiments may include acquiring first magnetic information corresponding to at least one magnetic member (e.g., the magnetic member 322 in FIG. 3) disposed on an annular member (e.g., the annular member 202 in FIG. 2A), based on a first Hall sensor (e.g., the first Hall sensor 351 in FIG. 3), acquiring second magnetic information corresponding to the at least one magnetic member 322, based on a second Hall sensor (e.g., the second Hall sensor 352 in FIG. 3), identifying whether or not the annular member 202 rotates based on the first magnetic information and the second magnetic information, and controlling a user interface displayed through a display (e.g., the display 220 in FIG. 2A) in response to the rotation. The at least one magnetic member 322 may be disposed to be spaced apart from each other at a first angle (e.g., the first angle 410 in FIG. 4) therebetween with respect to the center of the display 220, and the first Hall sensor 351 and the second Hall sensor 352 may be disposed to be spaced apart from each other at a second angle 420, which is smaller than the first angle 410, therebetween.

According to an embodiment, the first magnetic information and the second magnetic information may include a magnetic force value corresponding to at least one axial direction, the first magnetic information may be divided into an x-magnetic force value corresponding to the x-axis direction, a y-magnetic force value corresponding to the y-axis direction, and a z-magnetic force value corresponding to the z-axis direction through a sensor hub (e.g., the sensor hub 520 in FIG. 5), and the second magnetic information may be divided into an x'-magnetic force value corresponding to the x-axis direction, a y'-magnetic force value corresponding to the y-axis direction, and a z'-magnetic force value corresponding to the z-axis direction through the sensor hub 520.

According to an embodiment, the identifying whether or not the annular member 202 rotates may include calculating an x-difference value between the x-magnetic force value and the x'-magnetic force value, a y-difference value between the y-magnetic force value and the y'-magnetic force value, and a z-difference value between the z-magnetic force value and z'-magnetic force value, and identifying whether or not the annular member 202 rotates based on at least one of the x-difference value and the y-difference value, and the z-difference value.

The method according to an embodiment may further include identifying a rotation angle of the annular member 202 corresponding to the x-difference value, the y-difference value, and the z-difference value, based on magnetic information graph stored in a memory 130.

The method according to an embodiment may further include identifying a rotation speed of the annular member 202 corresponding to the x-difference value, the y-difference value, and the z-difference value, based on the magnetic information graph, and controlling the user interface displayed through the display 220, based on the identified rotation speed.

The method according to an embodiment may further include identifying a section angle and a relative angle for the annular member 202, based on the first magnetic information and the second magnetic information, and calculating an absolute angle according to the rotation of the annular member 202, based on the identified section angle and relative angle.

The method according to an embodiment may further include identifying a relative rotation angle of the annular member 202, based on the identified relative angle, and the relative angle may be determined based on an angle range corresponding to the first angle 410.

According to an embodiment, the second angle 420 may be configured to be smaller than the first angle 410 and may include an angle corresponding to half of the first angle 410.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a front cover;
a rear cover disposed on the opposite side of the front cover;
an annular member that is a side member at least partially surrounding a space between the front cover and the rear cover and comprises a display disposed at least partially along the front cover and at least one magnetic member disposed at a predetermined first angle and a predetermined first distance with respect to the center of the display;
a first Hall sensor disposed to be spaced a predetermined second distance apart from the center of the display;
a second Hall sensor disposed to be spaced the predetermined second distance apart from the center of the display and disposed to be spaced apart from the first Hall sensor at a second angle, which is smaller than the first angle, therebetween;
a memory; and
a processor operatively connected to the memory,
wherein the processor is configured to:
acquire first magnetic information corresponding to the at least one magnetic member, based on the first Hall sensor;
acquire second magnetic information corresponding to the at least one magnetic member, based on the second Hall sensor;
identify whether or not the annular member rotates, based on the first magnetic information and the second magnetic information; and
control a user interface displayed through the display in response to the rotation.

2. The electronic device according to claim 1, wherein the first magnetic information is calculated based on the magnetic field formed by the at least one magnetic member, based on the first Hall sensor, and
wherein the second magnetic information is calculated based on the magnetic field formed by the at least one magnetic member, based on the second Hall sensor.

3. The electronic device according to claim 1, wherein the first magnetic information and the second magnetic information comprise a magnetic force value corresponding to at least one axial direction.

4. The electronic device according to claim 3, further comprising a sensor hub,
wherein the first magnetic information is divided into an x-magnetic force value corresponding to the x-axis direction, a y-magnetic force value corresponding to the y-axis direction, and a z-magnetic force value corresponding to the z-axis direction through the sensor hub, and
wherein the second magnetic information is divided into an x'-magnetic force value corresponding to the x-axis direction, a y'-magnetic force value corresponding to the y-axis direction, and a z'-magnetic force value corresponding to the z-axis direction through the sensor hub.

5. The electronic device according to claim 4, wherein the processor is configured to:
calculate an x-difference value between the x-magnetic force value and the x'-magnetic force value, a y-difference value between the y-magnetic force value and the y'-magnetic force value, and a z-difference value between the z-magnetic force value and z'-magnetic force value; and
identify whether or not the annular member rotates based on at least one of the x-difference value and the y-difference value, and the z-difference value.

6. The electronic device according to claim 5, wherein the processor is configured to identify a rotation angle of the annular member corresponding to the x-difference value, the y-difference value, and the z-difference value, based on magnetic information graph stored in the memory.

7. The electronic device according to claim 5, wherein the processor is configured to:
identify a rotation speed of the annular member corresponding to the x-difference value, the y-difference value, and the z-difference value, based on magnetic information graph stored in the memory; and
control the user interface displayed through the display, based on the identified rotation speed.

8. The electronic device according to claim 7, wherein the magnetic information graph includes graphs of similar patterns repeated at every angle range corresponding to the first angle.

9. The electronic device according to claim 1, wherein the processor is configured to:
identify a section angle and a relative angle for the annular member, based on the first magnetic information and the second magnetic information;
calculate an absolute angle according to the rotation of the annular member, based on the identified section angle and relative angle;
identify a relative rotation angle of the annular member, based on the identified relative angle, and
wherein the relative angle is determined based on an angle range corresponding to the first angle.

10. The electronic device according to claim 1, wherein the second angle is configured to be smaller than the first angle and comprises an angle corresponding to half of the first angle.

11. A method comprising:
acquiring first magnetic information corresponding to at least one magnetic member disposed on an annular member, based on a first Hall sensor;
acquiring second magnetic information corresponding to the at least one magnetic member, based on a second Hall sensor;
identifying whether or not the annular member rotates based on the first magnetic information and the second magnetic information; and
controlling a user interface displayed through a display in response to the rotation,
wherein the at least one magnetic member is disposed to be spaced apart from each other at a first angle therebetween with respect to the center of the display, and
wherein the first Hall sensor and the second Hall sensor are disposed to be spaced apart from each other at a second angle, which is smaller than the first angle, therebetween.

12. The method according to claim 11, wherein the first magnetic information and the second magnetic information comprise a magnetic force value corresponding to at least one axial direction,
wherein the first magnetic information is divided into an x-magnetic force value corresponding to the x-axis direction, a y-magnetic force value corresponding to the y-axis direction, and a z-magnetic force value corresponding to the z-axis direction through a sensor hub, and
wherein the second magnetic information is divided into an x'-magnetic force value corresponding to the x-axis direction, a y'-magnetic force value corresponding to the y-axis direction, and a z'-magnetic force value corresponding to the z-axis direction through the sensor hub.

13. The method according to claim 12, wherein the identifying of whether or not the annular member rotates comprises:
calculating an x-difference value between the x-magnetic force value and the x'-magnetic force value, a y-difference value between the y-magnetic force value and the y'-magnetic force value, and a z-difference value between the z-magnetic force value and z'-magnetic force value; and
identifying whether or not the annular member rotates based on at least one of the x-difference value and the y-difference value, and the z-difference value.

14. The method according to claim 11, further comprising:
identifying a section angle and a relative angle for the annular member, based on the first magnetic information and the second magnetic information;
calculating an absolute angle according to the rotation of the annular member, based on the identified section angle and relative angle;
identifying a relative rotation angle of the annular member, based on the identified relative angle, and
wherein the relative angle is determined based on an angle range corresponding to the first angle.

15. The method according to claim 11, wherein the second angle is configured to be smaller than the first angle and comprises an angle corresponding to half of the first angle.
